# EUROPÄISCHE PATENTANMELDUNG

(11) **EP 4 302 988 A1**
(43) Veröffentlichungstag der Anmeldung: **10.01.2024**
(21) Anmeldenummer: 23175561.2
(22) Anmeldetag: 26.05.2023
(51) Int. Cl.: B32B 5/12, B32B 5/18, B32B 27/06, B32B 27/08, B32B 27/20, B32B 27/32

(54) **PLATTENMATERIAL UND VERFAHREN ZUR HERSTELLUNG DES PLATTENMATERIALS**

(30) Priorität: 05.07.2022 DE 102022206849; 05.07.2022 US 202217857642
(71) Anmelder: Profol GmbH, 83128 Halfing (DE)
(72) Erfinder: Steinhauer, Udo, 83128 Halfing (DE)
(74) Vertreter: Hoffmann Eitle

(57) **Zusammenfassung**

Plattenmaterial umfassend, eine erste Bandschicht mit einer Schar von Fasern, welche unidirektional in eine erste Richtung ausgerichtet sind und in einer Matrix aus einem Kunststoff angeordnet sind; eine zweite Bandschicht mit einer Schar von Fasern, welche unidirektional in eine zweite, senkrecht zur ersten Richtung ausgerichtet sind und in einer Matrix aus dem Kunststoff angeordnet sind; eine Schaumschicht umfassend einen Schaum aus dem Kunststoff; eine dritte Bandschicht mit einer Schar von Fasern, welche unidirektional in eine dritte Richtung ausgerichtet sind und in einer Matrix aus dem Kunststoff angeordnet sind; und eine vierte Bandschicht mit einer Schar von Fasern, welche unidirektional in eine vierte, senkrecht zur dritten Richtung ausgerichtet sind und in einer Matrix aus dem Kunststoff angeordnet sind.

## Beschreibung

### Technisches Gebiet

Die vorliegende Erfindung betrifft ein Plattenmaterial, das ultraleicht und hochfest ist. Ferner betrifft die Erfindung ein Herstellungsverfahren.

### Technologischer Hintergrund

Im Bereich der Plattenmaterialien sind Sandwichplatten bekannt, die aus mehreren Schichten bestehen. Meist sind die Sandwichplatten aus zwei dünnen Deckschichten und dazwischen einem Kern bzw. Befestigungselement aufgebaut.

Ein Aspekt der Plattenmaterialien ist diese besonders leicht zu gestalten. Ein weiterer Aspekt von Plattenmaterialien ist ein ausgezeichnetes Verhältnis von Gewicht zu mechanischer Festigkeit zu erreichen.

Bekannte Plattenmaterialien weisen Wabenstruktur-Kerne als Befestigungselement auf. Diese Wabenstruktur-Kerne haben den Nachteil, dass diese keine homogene Oberfläche und keine isotrope Stabilität besitzen. Somit kann die Deckschicht nicht vollflächig mit dem Wabenstruktur-Kern verbunden werden. Zudem hat der Wabenstruktur-Kern je nach Belastungsrichtung eine unterschiedliche Festigkeit.

Weiterhin sind bekannte Plattenmaterialien nicht nachhaltig und es ist keine Wiederverwertung bzw. Recyceln möglich.

### Zusammenfassung

Es besteht daher die Aufgabe, ein Plattenmaterial bereitzustellen, das eine hohe Festigkeit und ein geringes Gewicht aufweist. Zudem soll das Plattenmaterial nachhaltig und eine Wiederverwertung möglich sein.

Die genannten Probleme und Aufgabenstellungen werden durch die Gegenstände der unabhängigen Patentansprüche gelöst. Weitere vorteilhafte Ausgestaltungen der vorliegenden Erfindung sind in den abhängigen Patentansprüchen angegeben.

Dabei ist ein Gedanke der Erfindung, ein Plattenmaterial mit vier Bandschichten zu kombinieren, wobei unidirektionale Fasern der Bandschichten in benachbarten Bandschichten jeweils senkrecht zueinander ausgerichtet sind.

Die Erfindung betrifft ein Plattenmaterial, das ultraleicht ist und eine hohe Festigkeit besitzt.

Hierfür besteht das Plattenmaterial aus einer ersten Bandschicht mit einer Schar von Fasern, welche unidirektional in eine erste Richtung ausgerichtet sind und in einer Matrix aus einem Kunststoff angeordnet sind; einer zweiten Bandschicht mit einer Schar von Fasern, welche unidirektional in eine zweite, senkrecht zur ersten Richtung ausgerichtet sind und in einer Matrix aus dem Kunststoff angeordnet sind; einer Schaumschicht umfassend einen Schaum aus dem Kunststoff; einer dritten Bandschicht mit einer Schar von Fasern, welche unidirektional in eine dritte Richtung ausgerichtet sind und in einer Matrix aus dem Kunststoff angeordnet sind; und einer vierten Bandschicht mit einer Schar von Fasern, welche unidirektional in eine vierte, senkrecht zur dritten Richtung ausgerichtet sind und in einer Matrix aus dem Kunststoff angeordnet sind.

Unidirektional bedeutet, dass die Fasern alle parallel innerhalb einer Bandschicht ausgerichtet sind.

Das Plattenmaterial wird durch die Verwendung eines Schaumkerns im Gewicht reduziert. Durch die Kombination des Schaumkerns mit unidirektionalen Bandschichten mit Fasern in einer Kunststoffmatrix wird eine hohe Biegefestigkeit und Zugfestigkeit erreicht. Durch die unterschiedliche Ausrichtung der Fasern in benachbarten Bandschichten des Plattenmaterials wird die Festigkeit des Plattenmaterials erhöht. Das Plattenmaterial hat ein ausgezeichnetes Verhältnis von Gewicht zu mechanischer Festigkeit bzw. Steifigkeit. Das Plattenmaterial kann auf Grund der Verwendung von einem einheitlichen Kunststoff wiederverwertet werden. Beispielsweise kann das Plattenmaterial in einem Recyclingprozess gehäckselt, regranuliert und der Matrixgehalt eingestellt werden. Anschließend kann das Granulat für eine spätere Spritzgussanwendung verwendet werden, beispielsweise für Anwendungen mit Langfaserverstärkten Thermoplasten (LFT). Ferner kann das Plattenmaterial einfacher hergestellt werden.

Gemäß einer Ausführungsform ist die dritte Bandschicht zumindest teilweise über der vierten Bandschicht angeordnet; die Schaumschicht zumindest teilweise über der dritten Bandschicht angeordnet; die zweite Bandschicht zumindest teilweise über der Schaumschicht angeordnet; und die erste Bandschicht zumindest teilweise über der zweiten Bandschicht angeordnet. Somit kann ein Verbund aus den Bandschichten mit der Schaumschicht hergestellt werden. Durch die Anordnung der Schichten übereinander wird ein flächiger Verbund hergestellt und somit kann eine höhere Festigkeit erreicht werden.

Gemäß einer Ausführungsform überlappen sich die dritte Bandschicht und die vierte Bandschicht zumindest teilweise; überlappen sich die Schaumschicht und die dritte Bandschicht zumindest teilweise; überlappen sich die zweite Bandschicht und die Schaumschicht zumindest teilweise; überlappen sich die erste Bandschicht und die zweite Bandschicht zumindest teilweise. Bevorzugt überlappen sich die erste bis vierte Bandschicht und die Schaumschicht vollständig. Durch die Überlappung können die Bandschichten und die Schaumschicht über eine größtmögliche Fläche verbunden werden, so dass die Festigkeit, vor allem die Biegefestigkeit, des Plattenmaterials erhöht wird.

Gemäß einer weiteren Ausführungsform der vorliegenden Erfindung ist der Kunststoff der Matrix und des Schaums Polypropylen und/oder bestehen die Fasern zumindest einer der ersten bis vierten Bandschicht aus Glasfasern, Basaltfasern oder Naturfasern. Durch die Verwendung von Polypropylen in den Bandschichten und der Schaumschicht ist das Plattenmaterial einheitlich aus Polypropylen aufgebaut, so dass das Plattenmaterial nachhaltig und recycelbar ist.

Beispielsweise kann der Kunststoff ein Polypropylen (PP) sein. Der Kunststoff kann keine Füllstoffe aufweisen. Eine weitere Komponente des Kunststoffs kann ein Haftvermittler sein. Beispielsweise kann der Haftvermittler ein mit cyclischem Carbonsäureanhydrid funktionalisiertes Polypropylen aufweisen, insbesondere kann der Haftvermittler ein Maleinsäureanhydrid gepfropftes Polypropylen aufweisen. Der Haftvermittler kann Stabilisatoren und/oder Farben aufweisen. Bevorzugt kann der Haftvermittler ein Maleinsäureanhydrid gepfropftes Polypropylen und Stabilisatoren aufweisen.

Zumindest einer der ersten bis vierten Bandschicht kann eine Schichtdicke von 0,15 mm bis 0,25 mm, bevorzugt eine Schichtdicke von 0,2 mm (200 pm) aufweisen.

Die Matrix der ersten Bandschicht kann aus dem gleichen Kunststoff wie die Matrix der zweiten Bandschicht bestehen. Die Matrix der dritten Bandschicht kann aus dem gleichen Kunststoff wie die vierte Bandschicht bestehen. Die Matrix der ersten bis vierten Bandschicht kann aus dem gleichen Kunststoff bestehen. Der Kunststoff der Matrix kann ein thermoplastischer Kunststoff sein. Bevorzugt ist der Kunststoff der Matrix der ersten bis vierten Bandschicht Polypropylen. Durch die Verwendung von Polypropylen in der ersten bis vierten Bandschicht wird ein nachhaltiges Plattenmaterial erzeugt. Das Plattenmaterial kann aus einem sortenreinen Kunststoff bestehen.

Die Fasern in zumindest einer der ersten bis vierten Bandschicht können Glasfasern, Kohlenstofffasern (e.g., Carbonfasern bzw. Karbonfasern), Naturfasern (z.B. Zellulosefasern) oder Basaltfasern sein. Bevorzugt sind die Fasern zumindest einer der ersten bis vierten Bandschicht Glasfasern. Besonders bevorzugt bestehen die Fasern der ersten bis vierten Bandschicht aus Glasfasern. Durch die Verwendung von Fasern in der Bandschicht kann die Festigkeit jeder der Bandschichten verbessert werden. Die Schar von Fasern ermöglichen eine bessere Stabilität der Bandschichten. Zudem kann die Festigkeit des Plattenmaterials durch die Fasern erhöht werden.

Die Verwendung von Glasfasern ist kostengünstig, so dass ein günstiges Plattenmaterial mit einer verbesserten Festigkeit hergestellt werden kann. Die Glasfasern können aus kommerziellem Elektro-Glas (sog. E-Glas) bestehen. Die Dichte der Glasfaser kann 2,62 g/cm³ betragen.

Die Anzahl der Schar von Fasern kann in der ersten Bandschicht und vierten Bandschicht höher sein als die Anzahl der Schar von Fasern in der zweiten Bandschicht und dritten Bandschicht. Die erste Bandschicht und/oder die vierte Bandschicht kann einen Glasfaseranteil von 60% bis 75% (m/m) aufweisen. Bevorzugt kann die ersten und/oder die vierte Bandschicht einen Glasfaseranteil von 72% aufweisen. Die zweite Bandschicht und/oder die dritte Bandschicht kann ein Glasfaseranteil von 60% bis 75% (m/m) aufweisen. Bevorzugt kann die zweite und/oder die dritte Bandschicht einen Glasfaseranteil von 66% aufweisen. Alternativ können die erste bis vierte Bandschicht gleiche Glasfaseranteile aufweisen. Alternativ kann der Glasfaseranteil in der zweiten und dritten Bandschicht gleich sein. Ein Faserdurchmesser kann zwischen 15 µm und 20 pm, bevorzugt 17 µm betragen.

Der Kunststoff der Schaumschicht kann dem Kunststoff der Matrix zumindest einer der ersten bis vierten Bandschicht entsprechen. Der Kunststoff der Schaumschicht kann Polypropylen sein. Bevorzugt kann die Schaumschicht aus herkömmlichem Polypropylen bestehen, wie dieser z.B. in den Bereichen Automobil und Fußboden-Trittschalldämmung eingesetzt wird. Die Schaumschicht kann Polypropylenschaum sein, der ausgezeichnet räumlich isotrop ist. Die Schaumschicht kann keine Füllgase enthalten. Die Schichtdicke der Schaumschicht kann 2 mm bis 15 mm betragen, bevorzugt 5 mm bis 10 mm. Die Dichte der Schaumschicht kann 0,1 g/cm³ bis 0,4 g/cm³ betragen. Die Schaumschicht kann als fertige Schicht zwischen den Bandschichten angeordnet werden.

Durch die Verwendung eines Schaumkerns wird ermöglicht, dass Befestigungselemente direkt in das Plattenelement integrierbar sind, eine weitaus höhere und isotrope Stabilität erreicht wird und, dass das Plattenmaterial eine homogene Oberfläche aufweist. Somit kann ein Plattenmaterial mit einer verbesserten Festigkeit bereitgestellt werden.

Durch die Verwendung von Polypropylen in der ersten bis vierten Bandschicht und der Schaumschicht besteht das Plattenmaterial aus einem einzigen Monomaterialkunststoff Polypropylen, so dass das Plattenmaterial vollständig recyclingfähig ist. Bevorzugt kann das Plattenmaterial aus Polypropylen vollständig zu langfaserverstärkten Thermoplasten (LFT) Material recycelt werden. Somit ist das Plattenmaterial nachhaltig.

Gemäß einer Ausführungsform entspricht die vierte Richtung der ersten Richtung und die dritte Richtung der zweiten Richtung. Durch die Anordnung der Fasern in benachbarten Bandschichten um 90° gedreht, wird die Festigkeit des Plattenmaterials erhöht. Beispielsweise kann die erste Richtung zur zweiten Richtung um einen Wert in einem Bereich von 80° bis 100° gedreht sein. Die Richtung der Schar von Fasern in der ersten Bandschicht kann sich mit der Richtung der Schar von Fasern in der zweiten Bandschicht kreuzen, so dass die Festigkeit des Verbunds aus erster Bandschicht und zweiter Bandschicht erhöht wird. Durch die Kombination der Schaumschicht mit zwei Bandschichten auf der Oberseite und Unterseite, kann die Festigkeit des Plattenmaterials erhöht werden.

Gemäß einer Ausführungsform weist das Plattenmaterial ferner eine fünfte Bandschicht auf. Die fünfte Bandschicht kann eine Polypropylen-Folie sein. Alternativ kann die fünfte Bandschicht eine Polypropylen-Folie mit einer Lackschicht oder eine Polypropylen-Folie mit einer Dekorschicht aufweisen. Somit kann das Plattenmaterial direkt mit einer Folie, Lackschicht oder Dekorschicht einfach und kostengünstig verbunden werden.

Bevorzugt sind die erste bis vierte Bandschichten miteinander und mit der Schaumschicht ohne einen Klebstoff verbunden. Die erste bis vierte Bandschicht und die Schaumschicht sind bevorzugt miteinander durch Verschweißen (z.B. thermisches Laminieren) verbunden.

Unter dem Begriff Verschweißen wird das dauerhafte Verbinden der Bandschichten und der Schaumschicht miteinander durch Temperaturerhöhung und/oder Druckerhöhung verstanden. Eine Form des Verschweißens ist thermisches Laminieren von Kunststoffen für die vorliegende Offenbarung. Thermisches Laminieren bedeutet, dass die Bandschichten miteinander und mit der Schaumschicht durch Temperaturerhöhung und/oder Druckerhöhung flächig und klebstofffrei verbunden werden und ein Lösen der Schichten nicht zerstörungsfrei erfolgen kann. Insbesondere bedeutet thermisches Laminieren, dass die erste bis vierte Bandschichten und die Schaumschicht aus thermoplastischem Kunststoff miteinander dauerhaft und klebstofffrei durch Temperaturerhöhung und/oder Druckerhöhung verbunden werden.

Gemäß einer Ausführungsform der vorliegenden Erfindung ist ein Verfahren zur Herstellung eines Plattenmaterials bereitgestellt. Das Verfahren besteht aus den Schritten Bereitstellen einer ersten Bandschicht mit einer Schar von Fasern, welche unidirektional in eine erste Richtung ausgerichtet sind und in einer Matrix aus einem Kunststoff angeordnet sind; Bereitstellen einer zweiten Bandschicht mit einer Schar von Fasern, welche unidirektional in eine zweite, senkrecht zur ersten Richtung ausgerichtet sind und in einer Matrix aus dem Kunststoff angeordnet sind; Bereitstellen einer Schaumschicht umfassend einen Schaum aus dem Kunststoff; Bereitstellen einer dritten Bandschicht mit einer Schar von Fasern, welche unidirektional in eine dritte Richtung ausgerichtet sind und in einer Matrix aus dem Kunststoff angeordnet sind; Bereitstellen einer vierten Bandschicht mit einer Schar von Fasern, welche unidirektional in eine vierte, senkrecht zur dritten Richtung ausgerichtet sind und in einer Matrix aus dem Kunststoff angeordnet sind; Anordnen der ersten Bandschicht zumindest teilweise über der zweiten Bandschicht; Anordnen der zweiten Bandschicht zumindest teilweise über der Schaumschicht; Anordnen der dritten Bandschicht zumindest teilweise unter der Schaumschicht; Anordnen der vierten Bandschicht zumindest teilweise unter der dritten Bandschicht; Verschweißen der ersten Bandschicht mit der zweiten Bandschicht und der zweiten Bandschicht mit der Schaumschicht; Verschweißen der vierten Bandschicht mit der dritten Bandschicht und der dritten Bandschicht mit der Schaumschicht.

Damit kann ein ultraleichtes und hochfestes Plattenmaterial durch kontinuierliches Verschweißen (z.B. thermisches Laminieren) der faserverstärkten Bandschichten mit dem Schaumkern in einer Fertigungsanlage einfach und kostengünstig hergestellt werden.

Das Verfahren zur Herstellung von Plattenmaterial ist geeignet, das erfindungsgemäße Plattenmaterial herzustellen.

Gemäß einer Ausführungsform kann in dem Verfahren der Schritt des Verschweißen der ersten Bandschicht mit der zweiten Bandschicht und der zweiten Bandschicht mit der Schaumschicht; und der Schritt des Verschweißens der vierten Bandschicht mit der dritten Bandschicht und der dritten Bandschicht mit der Schaumschicht gleichzeitig durchgeführt werden. Somit kann das Plattenmaterial schneller und kostengünstiger hergestellt werden.

Gemäß einer Ausführungsform ist die erste bis vierte Bandschicht eine endlose Bandschicht. Eine endlose Bandschicht ist eine Bandschicht, die von einer Rolle bereitgestellt wird. Insbesondere kann die erste bis vierte Bandschicht von einer Rolle bereitgestellt. Damit kann das Plattenmaterial schnell und einfach innerhalb einer Fertigungsanlage hergestellt werden.

Gemäß einer Ausführungsform besteht der Kunststoff der Matrix und der Kunststoff des Schaums aus Polypropylen. Alternativ oder zusätzlich können die Fasern Glasfasern, Naturfasern oder Basaltfasern sein. Somit kann ein hochfestes, ultraleichtes und nachhaltig hergestelltes Plattenmaterial produziert werden.

Gemäß einer Ausführungsform weist das Verfahren ferner die Schritte auf Bereitstellen einer fünften Bandschicht; Anordnen der fünften Bandschicht zumindest teilweise über der ersten Bandschicht; und Verschweißen der fünften Bandschicht mit der ersten Bandschicht auf. Beispielsweise kann die fünfte Bandschicht eine Polypropylenfolie umfassen. Alternativ kann die Polypropylenfolie eine Polypropylenfolie mit einer Lackschicht oder eine Polypropylenfolie mit einer Dekorschicht aufweisen. Somit kann das Plattenmaterial innerhalb einer Fertigungsanlage einfach und kostengünstig hergestellt und veredelt werden.

### Kurze Beschreibung der Figuren

Die Ausführungsformen der vorliegenden Erfindung werden insbesondere im Zusammenhang der folgenden Figuren erklärt und verdeutlicht. Dabei soll sich der Schutzumfang nicht auf diese Ausführungsform beschränken und die Figuren und die dazugehörige Beschreibung dienen demnach nur zur Verdeutlichung der allgemeinen Erfindungsgedanken.
- Fig. 1: zeigt einen schematischen Aufbau der ersten Ausführungsform der Erfindung.
- Fig. 2: zeigt einen schematischen Aufbau der zweiten Ausführungsform der Erfindung.
- Fig. 3: zeigt eine Aufnahme eines Schnitts einer Bandschicht einer erfindungsgemäße Ausführungsform mit Glasfasern in einer Polypropylenmatrix.
- Fig. 4: zeigt eine Aufnahme eines Schnitts von zwei thermisch laminierten Bandschichten einer erfindungsgemäßen Ausführungsform der Erfindung.

### Detaillierte Beschreibung

Die Ausführungsformen sind beispielhaft, und nicht einschränkend, zu verstehen, so dass Einzelmerkmale der Ausführungsformen auch zur Charakterisierung der Erfindung herangezogen werden. Ferner können Modifikationen der nachfolgend beschriebenen Ausführungsform jeweils einzeln miteinander kombiniert werden, um weitere Ausführungsformen der Erfindung auszubilden.

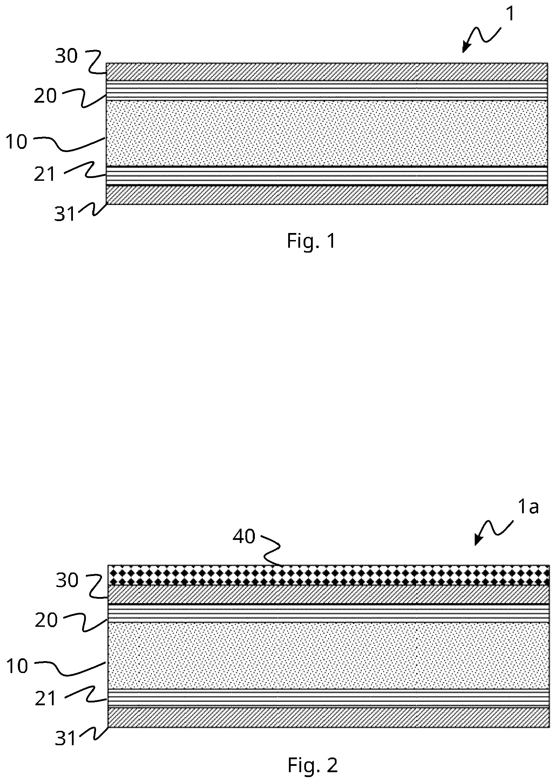

Fig. 1 zeigt ein Plattenmaterial 1 einer ersten Ausführungsform, dessen Aufbau unter Bezugnahme der Fig. 1 genauer beschrieben wird.

Das Plattenmaterial 1 besteht aus einer ersten Bandschicht 30, die eine Schar von Fasern aufweist, die unidirektional in eine erste Richtung ausgerichtet sind. Die Fasern der ersten Bandschicht 30 sind in einer Matrix aus Kunststoff angeordnet. Bevorzugt sind Glasfasern in einer Matrix aus Polypropylen angeordnet. Das Plattenmaterial 1 weist eine zweite Bandschicht 20 auf, die eine Schar von Fasern aufweist, die unidirektional in eine zweite, senkrecht zur ersten Richtung ausgerichtet sind. Die Schar von Fasern der zweiten Bandschicht 20 sind in einer Matrix aus Polypropylen angeordnet. Die zweite Bandschicht 20 ist thermisch mit der ersten Bandschicht 30 laminiert. Das Plattenmaterial besteht ferner aus einer Schaumschicht 10, die aus einem Schaum aus Polypropylen besteht. Das Plattenmaterial 1 besteht ferner aus einer dritten Bandschicht 21. Die dritte Bandschicht 21 besteht wiederum aus einer Schar von Fasern, die unidirektional in eine dritte Richtung ausgerichtet sind und in einer Matrix aus Polypropylen angeordnet sind. Das Plattenmaterial 1 besteht ferner aus einer vierten Bandschicht 31 mit einer Schar von Fasern, die unidirektional in eine vierte, senkrecht zur dritten Richtung ausgerichtet sin und in einer Matrix aus Polypropylen angeordnet sind. Die zweite Bandschicht 20 ist thermisch mit der ersten Bandschicht 30 und der Schaumschicht 10 laminiert. Die dritte Bandschicht 21 ist thermisch mit der vierten Bandschicht 31 und der Schaumschicht 10 laminiert. Somit sind die Schichten des Plattenmaterials 1 miteinander flächig verbunden.

Dabei weist die Schaumschicht 10 eine isotrope Festigkeit auf und damit eine höhere Stabilität. Zudem besitzt die Schaumschicht 10 eine homogene Oberfläche. Die Zusammensetzung des Polypropylens der Schaumschicht kann zur Zusammensetzung des Polypropylens der ersten bis vierten Bandschichten 30, 20, 21, 31 variieren. In weiteren Ausführungsformen kann die Zusammensetzung des Polypropylens zwischen Schichten des Plattenmaterials 1 variieren. Die ersten bis vierten Bandschichten 30, 20, 21, 31 können jeweils ein endloses Band sein.

Die erste Bandschicht 30, wie auch die vierte Bandschicht 31, ist ein unidirektionales Tape mit einem Glasfaseranteil von 60% bis 80% in einer Polypropylenmatrix, wobei die Fasern in Maschinenrichtung ausgerichtet sind. Bevorzugt kann der Glasfaseranteil der ersten Bandschicht 30 und der vierten Bandschicht 31 72% betragen. Die zweite Bandschicht 20, wie auch die dritte Bandschicht 21, ist ein unidirektionales Tape mit einem Glasfaseranteil von 60% bis 80% in einer Polypropylenmatrix, wobei die Fasern quer zur Maschinenrichtung ausgerichtet sind. Bevorzugt kann der Glasfaseranteil der zweiten Bandschicht 20 und der dritte Bandschicht 21 66% betragen. Innerhalb einer Bandschicht sind alle Fasern parallel zueinander ausgerichtet. Die Schichtdicke jeder der ersten bis vierten Bandschicht 30, 20, 21, 31 ist 200 µm. Die Schichtdicke der Schaumschicht 10 variiert zwischen 2 mm und 15 mm. Bevorzugt beträgt die Schichtdicke der Schaumschicht 10 5 mm bis 10 mm mit einer Dichte von 0,1 g/cm³ bis 0,4 g/cm³. Der Faserdurchmesser beträgt 17 µm innerhalb einer Bandschicht.

Der Kunststoff aus Polypropylen kann einen Haftvermittler aufweisen. Der Haftvermittler kann ein mit cyclischem Carbonsäureanhydrid funktionalisiertes Polypropylen aufweisen. Alternativ kann der Kunststoff des Plattenmaterials 1 aus einem anderen thermoplastischen Material als Polypropylen bestehen.

Das Plattenmaterial 1 besteht in der bevorzugten Ausführungsform aus einem Schaumkern 10 und auf der Ober- und Unterseite darauf thermisch laminierten unidirektionale Tapes 30, 20, 21, 31 (sog. UD-Tapes).

Das Plattenmaterial 1a der zweiten Ausführungsform unterscheidet sich von dem Plattenmaterial 1 der ersten Ausführungsform darin, dass eine weitere Polypropylenfolie 40 auf der ersten Bandschicht angeordnet ist. Alternativ kann die Polypropylenfolie 40 eine Polypropylenfolie mit einer Lackfolie oder eine Polypropylenfolie mit einer Dekorfolie sein, die auf der ersten Bandschicht 30 angeordnet ist. Die Polypropylenfolie 40 ist auf der ersten Bandschicht 30 aufgebracht, die zu einer Außenseite des Plattenmaterials weist. Wie in Fig. 2 dargestellt weist das Plattenmaterial eine zusätzliche Polypropylenfolie 40 auf der ersten Bandschicht 30 auf. Das Plattenmaterial der Fig. 2 ist wie in der ersten Ausführungsform beschrieben aufgebaut.

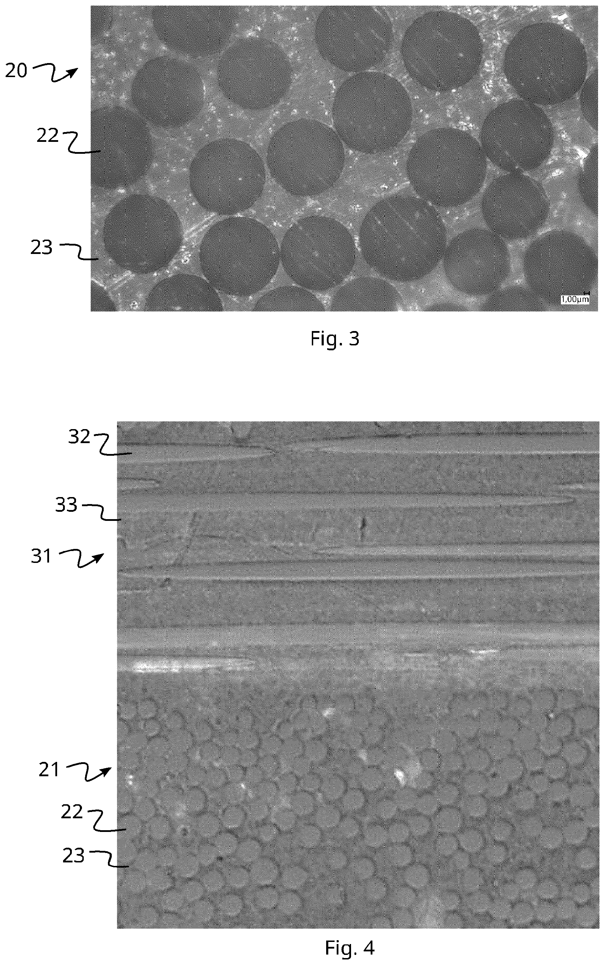

Fig. 3 zeigt eine Aufnahme eines Schnitts einer Bandschicht 20 einer erfindungsgemäßen Ausführungsform mit Glasfasern 22 in einer Polypropylenmatrix 23. Innerhalb der Bandschicht 20, sowie in den weiteren Bandschichten, 30, 21, 31, sind die Glasfasern vollständig von einer Polypropylenmatrix umschlossen. Die Glasfasern 22 sind in Fig. 3 im Querschnitt gezeigt, die jeweils vollständig von der Polypropylenmatrix umschlossen sind. Dabei kann die Anzahl der Fasern innerhalb einer Bandschicht 20 in einigen Bereichen variieren, sodass die Dicke der Polypropylenmatrix 23 zwischen benachbarten Glasfasern 22 variieren kann. Die Glasfasern 22 sind alle gleich orientiert und ausgerichtet.

Fig. 4 zeigt eine Aufnahme eines Schnitts von zwei thermisch laminierten Bandschichten 31, 21 einer erfindungsgemäßen Ausführungsform der Erfindung. Die Orientierung der Fasern 32, 22 ist zwischen der dritten Bandschicht 21 und der vierten Bandschicht 31 unterschiedlich. Die Fasern 32 der vierten Bandschicht 31 sind in Längsrichtung in Fig. 4 geschnitten worden. Zwischen den Glasfasern 32 der vierten Bandschicht 31 befindet sich die Polypropylenmatrix 33. Dagegen sind die Fasern 22 der dritten Bandschicht 21 im Querschnitt in Fig. 4 geschnitten worden. Zwischen den Glasfasern 22 der dritten Bandschicht 21 befindet sich die Polypropylenmatrix 23 der dritten Bandschicht 21. Fig. 4 zeigt, dass die Faserrichtung der dritten Bandschicht 21 um 90° zu der Faserrichtung der vierten Bandschicht 31 gedreht ist.

Das Verfahren zur Herstellung eines Plattenmaterials ist geeignet, das Plattenmaterial 1 der ersten und zweiten Ausführungsform herzustellen.

Das Verfahren ermöglicht ein kontinuierliches thermisches Laminieren der ersten bis vierten Bandschichten (sog. UD-Tapes) mit dem Schaumkern in einer Doppelbandpresse.

Das Verfahren weist die Schritte auf: Bereitstellen einer ersten Bandschicht mit einer Schar von Fasern, welche unidirektional in eine erste Richtung ausgerichtet sind und in einer Matrix aus einem Kunststoff angeordnet sind und Bereitstellen einer zweiten Bandschicht mit einer Schar von Fasern, welche unidirektional in eine zweite, senkrecht zur ersten Richtung ausgerichtet sind und in einer Matrix aus dem Kunststoff angeordnet sind. Zudem erfolgt der Schritt Bereitstellen einer Schaumschicht aufweisend einen Schaum aus dem Kunststoff, möglichst gleichzeitig innerhalb einer Fertigungsanlage. Weiterhin erfolgen die Schritte Bereitstellen einer dritten Bandschicht mit einer Schar von Fasern, welche unidirektional in eine dritte Richtung ausgerichtet sind und in einer Matrix aus dem Kunststoff angeordnet sind und Bereitstellen einer vierten Bandschicht mit einer Schar von Fasern, welche unidirektional in eine vierte, senkrecht zur dritten Richtung ausgerichtet sind und in einer Matrix aus dem Kunststoff angeordnet sind, möglichst zeitgleich. Das Verfahren weist ferner die Schritte auf: Anordnen der ersten Bandschicht zumindest teilweise über der zweiten Bandschicht; Anordnen der zweiten Bandschicht zumindest teilweise über der Schaumschicht; Anordnen der dritten Bandschicht zumindest teilweise unter der Schaumschicht; und Anordnen der vierten Bandschicht zumindest teilweise unter der dritten Bandschicht. Anschließend wird die ersten Bandschicht mit der zweiten Bandschicht und die zweiten Bandschicht mit der Schaumschicht verschweißt und die vierten Bandschicht mit der dritten Bandschicht und die dritten Bandschicht mit der Schaumschicht verschweißt. Bevorzugt werden die erste Bandschicht, die zweite Bandschicht, die Schaumschicht, die dritte Bandschicht und die vierte Bandschicht in einem Schritt (gleichzeitig) miteinander verschweißt. Somit wird ein Plattenmaterial hergestellt, dass aus mehreren Bandschichten und einem Schaumkern besteht, die miteinander verschweißt sind, insbesondere thermisch miteinander laminiert sind.

Ferner kann im Verfahren die zweite Bandschicht und/oder die dritte Bandschicht von einer Transversalrolle bereitgestellt werden. Die Schaumschicht kann im Verfahren als Platte oder von einer Rolle bereitgestellt werden, abhängig von der Steifigkeit des Schaumkerns.

Das Verbinden der Bandschichten miteinander und mit der Schaumschicht findet durch Temperaturerhöhung und Druckerhöhung statt. Somit wird das Plattenmaterial thermisch laminiert und es wird kein Klebstoff benötigt.

Auf das Plattenmaterial kann eine zusätzliche Polypropylenfolie im gleichen Produktionsprozess über einen zusätzlichen Abwickler auf die erste Bandschicht 30 (sog. UD-Tape-Lage) aufgebracht werden. Alternativ kann auf das Plattenmaterial eine Polypropylenfolie mit einer Lackfolie oder eine Polypropylenfolie mit einer Dekorfolie auf die erste Bandschicht 30 aufgebracht werden.

Obwohl nun detaillierte Ausführungsformen der Erfindung beschrieben wurden, sollten diese lediglich zum besseren Verständnis der Erfindung und ihrer Wirkungen dienen. Der Schutzumfang ist durch die folgenden Patentansprüche definiert und soll nicht durch die detaillierte Beschreibung eingeschränkt werden.

## Patentansprüche

1. Plattenmaterial umfassend,
- eine erste Bandschicht mit einer Schar von Fasern, welche unidirektional in eine erste Richtung ausgerichtet sind und in einer Matrix aus einem Kunststoff angeordnet sind;
- eine zweite Bandschicht mit einer Schar von Fasern, welche unidirektional in eine zweite, senkrecht zur ersten Richtung ausgerichtet sind und in einer Matrix aus dem Kunststoff angeordnet sind;
- eine Schaumschicht umfassend einen Schaum aus dem Kunststoff;
- eine dritte Bandschicht mit einer Schar von Fasern, welche unidirektional in eine dritte Richtung ausgerichtet sind und in einer Matrix aus dem Kunststoff angeordnet sind; und
- eine vierte Bandschicht mit einer Schar von Fasern, welche unidirektional in eine vierte, senkrecht zur dritten Richtung ausgerichtet sind und in einer Matrix aus dem Kunststoff angeordnet sind.

2. Plattenmaterial nach Anspruch 1,
wobei die dritte Bandschicht zumindest teilweise über der vierten Bandschicht angeordnet ist;
die Schaumschicht zumindest teilweise über der dritten Bandschicht angeordnet ist;
die zweite Bandschicht zumindest teilweise über der Schaumschicht angeordnet ist; und
die erste Bandschicht zumindest teilweise über der zweiten Bandschicht angeordnet ist.

3. Plattenmaterial nach Anspruch 1 oder Anspruch 2,
wobei sich die dritte Bandschicht und die vierte Bandschicht zumindest teilweise überlappen;
sich die Schaumschicht und die dritte Bandschicht zumindest teilweise überlappen;
sich die zweite Bandschicht und die Schaumschicht zumindest teilweise überlappen;
sich die erste Bandschicht und die zweite Bandschicht zumindest teilweise überlappen.

4. Plattenmaterial nach einem der Ansprüche 1 bis 3, wobei der Kunststoff der Matrix und des Schaums ein thermoplastischer Kunststoff ist, bevorzugt Polypropylen ist, und/oder die Fasern zumindest einer der ersten bis vierten Bandschicht Glasfasern, Basaltfasern oder Naturfasern sind.

5. Plattenmaterial nach einem der Ansprüche 1 bis 4, wobei die vierte Richtung der ersten Richtung entspricht und die dritte Richtung der zweiten Richtung entspricht; und/oder das Plattenmaterial ferner eine fünfte Bandschicht aufweist.

6. Verfahren zur Herstellung eines Plattenmaterials, das Verfahren bestehend aus den Schritten:
- Bereitstellen einer ersten Bandschicht mit einer Schar von Fasern, welche unidirektional in eine erste Richtung ausgerichtet sind und in einer Matrix aus einem Kunststoff angeordnet sind;
- Bereitstellen einer zweiten Bandschicht mit einer Schar von Fasern, welche unidirektional in eine zweite, senkrecht zur ersten Richtung ausgerichtet sind und in einer Matrix aus dem Kunststoff angeordnet sind;
- Bereitstellen einer Schaumschicht umfassend einen Schaum aus dem Kunststoff;
- Bereitstellen einer dritten Bandschicht mit einer Schar von Fasern, welche unidirektional in eine dritte Richtung ausgerichtet sind und in einer Matrix aus dem Kunststoff angeordnet sind;
- Bereitstellen einer vierten Bandschicht mit einer Schar von Fasern, welche unidirektional in eine vierte, senkrecht zur dritten Richtung ausgerichtet sind und in einer Matrix aus dem Kunststoff angeordnet sind;
- Anordnen der ersten Bandschicht zumindest teilweise über der zweiten Bandschicht;
- Anordnen der zweiten Bandschicht zumindest teilweise über der Schaumschicht;
- Anordnen der dritten Bandschicht zumindest teilweise unter der Schaumschicht;
- Anordnen der vierten Bandschicht zumindest teilweise unter der dritten Bandschicht;
- Verschweißen der ersten Bandschicht mit der zweiten Bandschicht und der zweiten Bandschicht mit der Schaumschicht;
- Verschweißen der vierten Bandschicht mit der dritten Bandschicht und der dritten Bandschicht mit der Schaumschicht.

7. Verfahren zur Herstellung des Plattenmaterials nach Anspruch 6, wobei der Schritt des Verschweißen der ersten Bandschicht mit der zweiten Bandschicht und der zweiten Bandschicht mit der Schaumschicht; und der Schritt des Verschweißens der vierten Bandschicht mit der dritten Bandschicht und der dritten Bandschicht mit der Schaumschicht gleichzeitig durchgeführt werden.

8. Verfahren zur Herstellung des Plattenmaterials nach Anspruch 6 oder Anspruch 7, wobei die erste Bandschicht und die zweite Bandschicht endlose Bandschichten sind.

9. Verfahren zur Herstellung des Plattenmaterials nach einem der Ansprüche 6 bis 8, wobei der Kunststoff der Matrix und des Schaums aus thermoplastischem Kunststoff besteht, bevorzug aus Polypropylen besteht, und/oder die Fasern Glasfasern, Naturfasern oder Basaltfasern sind.

10. Verfahren zur Herstellung des Plattenmaterials nach einem der Ansprüche 6 bis 8, wobei das Verfahren ferner die Schritte aufweist:
- Bereitstellen einer fünften Bandschicht;
- Anordnen der fünften Bandschicht zumindest teilweise über der ersten Bandschicht;
- Verschweißen der fünften Bandschicht mit der ersten Bandschicht.
